Europäisches Patentamt

European Patent Office

Office européen des brevets

(11) Publication number: **0 021 568**

**B1**

# (12) EUROPEAN PATENT SPECIFICATION

(45) Date of publication of patent specification: **31.07.85**

(51) Int. Cl.⁴: **G 01 G 23/16**

(21) Application number: **80301398.6**

(22) Date of filing: **28.04.80**

(54) Electronic weighing apparatus.

(30) Priority: **19.06.79 JP 84608 79 U**
**10.07.79 JP 95285/79 U**

(43) Date of publication of application:
**07.01.81 Bulletin 81/01**

(45) Publication of the grant of the patent:
**31.07.85 Bulletin 85/31**

(84) Designated Contracting States:
**DE FR GB SE**

(56) References cited:
**DE-A-2 738 409**
**FR-A-2 213 489**
**JP-A-53 009 571**
**US-A-3 887 797**
**US-A-3 916 173**
**US-A-4 004 139**
**US-A-4 043 412**
**US-A-4 137 979**

(73) Proprietor: **KUBOTA LIMITED**
**2-47 Shikitsuhigashi 1-chome**
**Naniwa-ku Osaka-shi Osaka-fu (JP)**

(72) Inventor: **Itani, Seiichi**
**22-407, Shinkanaoka-cho 3-1**
**Sakai-shi, Osaka-fu (JP)**

(74) Representative: **Wright, Peter David John et al**
**R.G.C. Jenkins & Co. 12-15, Fetter Lane**
**London EC4A 1PL (GB)**

Courier Press, Leamington Spa, England.

## Description

### Background of the invention
### Field of the invention

The present invention relates to an electronic weighing apparatus. More specifically, the present invention relates to an electronic weighing apparatus wherein an analog voltage provided from a load converter such as a strain-gage type load cell is converted into a digital value, whereby the magnitude of the load is displayed in a digital manner.

### Description of the prior art;

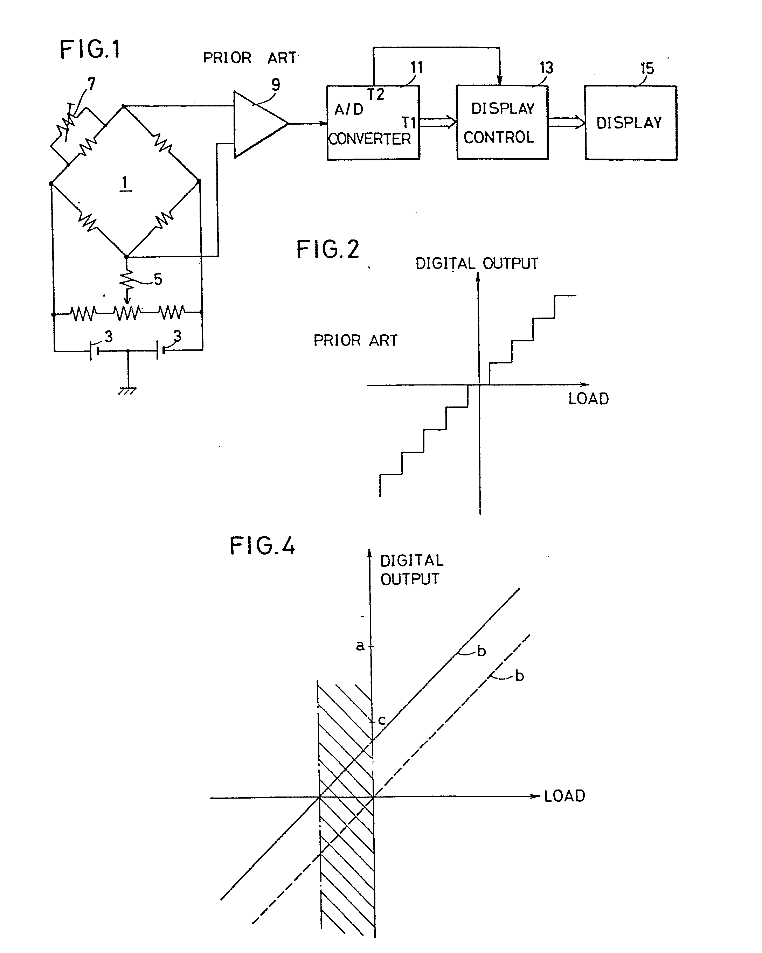

Conventionally, a strain-gage type load cell has been used as an example of a load converter. One example of an electronic weighing apparatus employing a conventional strain-gage type load cell is shown in Fig. 1. Referring to Fig. 1, a weighing pan, not shown, for an article to be weighed is coupled to a strain-gage type load cell 1. The load cell 1 comprises an exciting voltage source 3, a fine adjustment variable resistor 5 and a coarse adjustment variable resistor 7. As is well known, such a load cell 1 provides an analog signal of a magnitude which is proportional to the weight of the article placed on the weighing pan. The analog signal is applied to an amplifier 9, and the amplified analog voltage obtained from the amplifier 9 is applied to an analog/digital converter 11. The analog/digital converter 11 may comprise an integrated circuit "ICL8052/ICL71CO3" manufactured by Intersil Incorporated, U.S.A. for example. The analog/digital converter 11 serves to convert the analog voltage from amplifier 9 into a corresponding digital signal which is applied to a display control 13 from a terminal T1. The display control 13 is responsive to a signal representing the sign (plus or minus) of the given weight value as well as to the digital signal applied from the terminal T1 of the analog/digital converter 11, and causes a well-known digital display 15 to display the same.

In such a conventional electronic weighing apparatus, it has been common practice to make the zero load output of the load cell 1 and the zero point of the display 15 coincide with each other and to that end a fine adjustment variable resistor 5 is required. Such a variable resistor is liable to exhibit a poor temperature coefficient characteristic and is not necessarily stable with respect to temperature variation. Accordingly, fine adjustment is required from time to time to compensate for zero point drift with ambient temperature variations and the displayed weight data cannot necessarily be accepted as being accurate. Furthermore, the digital output obtained from the analog/digital converter 11 inevitably exhibits a stepwise variation, for example as shown in Fig. 2, wherein it is required that no output change occurs just at the zero point, and in consequence of this the higher the resolution of the apparatus the more difficult such zero point adjustment becomes.

In order to avoid the above described problems, it has been proposed in our Japanese Patent Publication No. JP—A—53-9571 (published 28 January 1978) to offset the zero point of the load cell and the zero point of the display from each other. This proposal is advantageous in that, as described in JP—A—53-9571 abovementioned, enhanced resolution of the analog/digital converter can be achieved with a corresponding enhancement of the degree of measurement accuracy. A different approach is described in United States Patent US—A—4 137 979 to Seiichi Itani, the same inventor as is responsible for the present invention and the invention of JP—A—53-9571 abovementioned and assignee to us, where a zero tracking arrangement is utilised for constantly updating a memory with a correction factor corresponding to the deviation from zero of the zero load output of the load converter so as repetitively to effect a zero setting operation in the apparatus. The arrangement of US—A—4 137 979 thus does not positively offset the zero load output of the load cell from the display zero as in the case of the arrangement of JP—A—53-9571 abovementioned. Other zero tracking and zero error correction arrangements are described in United States Patents Nos. US—A—4 043 412, US—A—4 004 139 and US—A—3 916 173 and none of these concern a system in which an offset is deliberately inserted between the zero load output of the load cell and the display zero. The present invention is concerned with the type of apparatus in which an offset is used and is not concerned with a zero tracking or automatic zeroing type of apparatus.

In the arrangement of JP—A—53-9571 abovementioned the offset value is arranged to be stored in a memory in response to the manual operation of a control provided on the apparatus. When a weight is measured, the offset value is then subtracted from the output of the analog/digital converter and the resulting difference value is displayed as the weighed value. Such an electronic weighing apparatus thus has no requirement for precise zero point adjustment and can be more simply manufactured. The output of the analog/digital converter of the apparatus can however be stored as the offset value at any time in response to the manual operation of the control and the apparatus of JP—A—53-9571 thus has the disadvantage that the content of the memory can be set to correspond to the output of the analog/digital converter without regard to the magnitude of the weighed value at that time. In other words, even if the output from the analog/digital converter is relatively large at the relevant time, such value can be stored in the memory as the offset value.

However, the load cells used in such electronic weighing apparatuses and the structures for supporting such load cells are not necessarily designed to have a mechanical strength beyond a finite limit. Correspondingly the outputs from such load cells exhibit a linear characteristic only within a given limited range. Accordingly, although the output of the load cell and thus of the connected analog/digital converter exhibits a linear change with respect to weight variation throughout a given predetermined range inherent to a particular apparatus, the output does not necessarily exhibit such a linear change when outside of such range. If an offset value set immediately in advance of a weighing measurement is too large, then the sum of the offset value and the value corresponding to the weight of the article could exceed the above described linearity range, in which case, the weighing accuracy attained by the apparatus may not necessarily be good.

Furthermore, in such an apparatus as is described above, it has been common practice that the operator cannot observe the magnitude of the offset value being stored in the memory by observing the display, and thus it is possible for weight measurements to be made without knowing that the offset value is excessive with consequent degradation of weighing accuracy. Even if the apparatus is structured such that the offset value is manually entered into memory with the operator himself checking its magnitude it is conceivable that a situation can occur such that, unless the range of offset value inherent to the apparatus is known, an error of judgement can be made by the operator resulting in erroneous offset value renewal.

Summary of the invention:

According to the present invention there is provided an electronic weighing apparatus comprising: weight sensitive means for providing an output signal representative of a sensed weight, the said means being arranged so as to generate an output signal offset from zero in response to a zero load, storage means for a correction signal representative of a correction factor to be combined with the output signal from the weight sensitive means for developing a corrected weight signal, said storage means being connected to receive the output of said weight sensitive means for storing the same for use as said correction signal, control means for providing an enabling signal to said storage means, means responsive to said output signal from the weight sensitive means and to said correction signal from said storage means for developing said corrected weight signal, and display means responsive to said corrected weight signal for providing a corresponding measured weight indication, all as known from the apparatus described in JP—A—53-9571 aforementioned, and wherein, in accordance with the invention, said control means is responsive to the switching on of the power supply to the apparatus for providing said enabling signal a predetermined time period after such switching on, means are provided for determining whether or not the output signal from the weight sensitive means is representative of a sensed weight within a predetermined offset range, for example of the order of 4% to 5% of the full scale range of weight values measurable by the apparatus, and for providing a corresponding output signal, and in that the storage by said storage means of the output of said weight sensitive means is dependent upon the presence of said enabling signal from said control means and of a signal from said determining means indicative of a second weight being within said predetermined offset range, the arrangement thereby being such that after a predetermined time period has elapsed following the switching on of the apparatus the sensed weight signal then derived from said weight sensitive means will be stored in said storage means for use as said description signal only if it is representative of a sensed weight within said predetermined offset range.

Since an offset value exceeding a predetermined range can not be present in the apparatus according to the invention, so it can be arranged that a weighing measurement outside of the linearity range of the apparatus but within the weighing capabilities of the apparatus can be avoided. In other words, weighing measurements within a range where the weighing accuracy is degraded can be avoided. Conversely, once an offset value has been set, accurate weighing measurements can be surely expected. In the case where an offset value outside of a predetermined range is attempted to be set, the apparatus operates so as to prevent an offset value from being set and it can be correspondingly concluded that the zero point of the apparatus has deviated to a substantial extent. In dependence upon whether an offset value can or can not be set, it can thus be determined whether or not the apparatus is operating normally or is defective.

In one preferred embodiment of the present invention, a strain-gage type load cell is employed as a load converter and the output thereof is converted into a digital value by means of an analog/digital converter. The converted digital value is applied to a microcomputer or a microprocessor.

An interrupt signal is applied to the microcomputer from the analog/digital converter upon completion of conversion, so that the microcomputer is responsive to the interrupt signal to read the digital value from the analog/digital converter. The analog/digital converter and the microcomputer can be arranged to operate in synchronism so that no requirement arises for an intermediate input/output register. Even in such an apparatus employing a microcomputer, it is determined whether the previously described offset value is within a predetermined range and, if the when the offset value exceeds the above described range, renewal setting of the offset value is inhibited, thereby to prevent inaccurate weighing measurement

The present invention together with preferred features and advantages thereof will become more apparent from consideration of the following detailed description when taken in conjunction with the accompanying drawings.

Brief description of the drawings

Fig. 1 is a block diagram showing one example of a conventional electronic weighing apparatus in which the present invention can be advantageously employed;

Fig. 2 is a graph showing the relationship between digital output and load in the Fig. 1 prior art apparatus;

Fig. 3 is a block diagram showing one exemplary embodiment of the present invention;

Fig. 3A is a timing chart for explaining the operation of a circuit for detecting the turning on of the power supply which is included in the apparatus shown in Fig. 3;

Fig. 4 is a graph showing the variation of the load cell output with respect to load for explaining the operation of the Fig. 3 embodiment;

Fig. 5 is a schematic diagram of a preferred form of display control;

Fig. 6 is a timing chart for explaining the operation of the display control of Fig. 5;

Fig. 7 is a block diagram showing another embodiment of the present invention;

Fig. 8 is a timing chart for explaining the Fig. 7 embodiment; and

Figs. 9 and 10 are flow diagrams for explaining the operation of the Fig. 7 embodiment.

Description of the preferred embodiments:

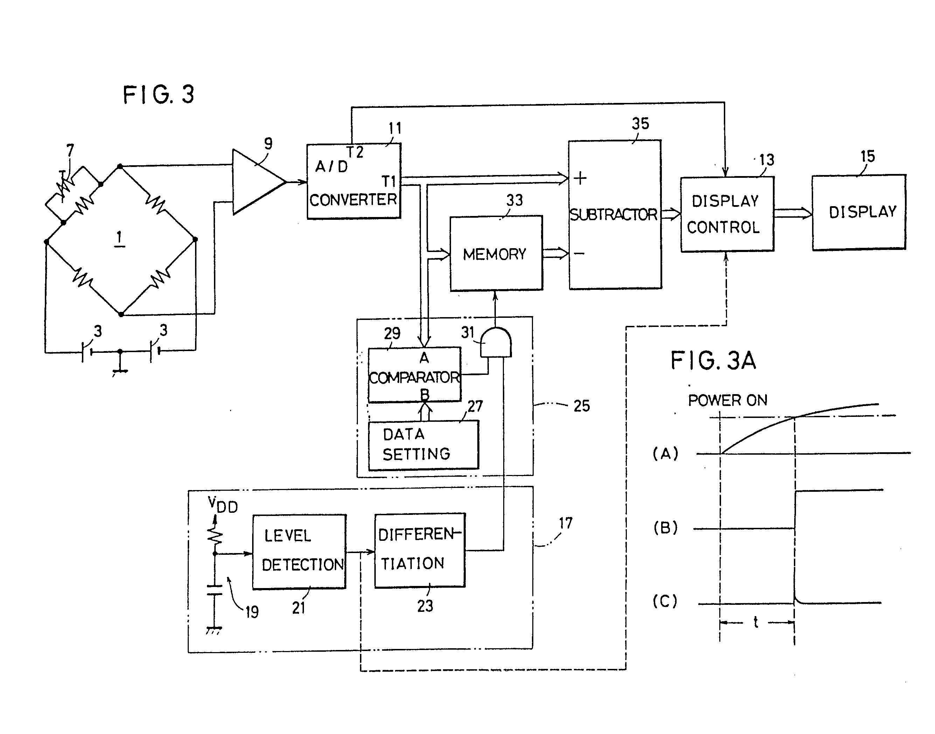

Fig. 3 is a block diagram showing one embodiment of the present invention. The embodiment shown comprises a strain-gage type load cell 1 which comprises an exciting voltage source 3 and a variable resistor 7. The analog output signal from the strain-gate load cell 1 is amplified by an amplifier 9 having a predetermined gain factor and the amplifier output is applied to an analog/digital converter 11. By adjusting the gain of the amplifier 9, it is possible to make range adjustments. The analog-digital converter 11 may for example be implemented by the previously described model No. ICL8052/ICL71C03 manufactured by Intersil Incorporated, U.S.A. and has two output terminals T1 and T2. Terminal T1 serves as a data output terminal for providing a binary coded decimal signal representative of the magnitude of the output (an analog voltage) obtained from the amplifier 9. Terminal T2 provides a signal representative of the polarity of the analog output voltage of the amplifier 9 and assumes a low level (logic zero) when the polarity is plus and a high level (logic one) when the polarity is minus. The digital signal obtained from terminal T1 of the analog/digital converter 11 is applied to a comparator 29, to a memory 33, and also to a subtractor 35 as a minuend. The signal obtained from the terminal T2 of the analog/digital converter 11 is applied to display control 13 to be described subsequently.

A circuit 17 is provided for detecting the turning on of the power supply and comprises an integrating circuit 19 comprising a series connection of a resistor and a capacitor. The integration circuit 19 is responsive to a voltage $V_{DD}$ upon turning on of a power supply, not shown, of the apparatus to integrate the voltage in accordance with a predetermined integration time constant. The output of the integration circuit 19 is applied to a level detector 21, such as a Schmidt circuit. The level detector 21 is responsive to the output voltage of the integration circuit 19 to provide a signal which assumes a high level if and when the output voltage of the integration circuit 19 exceeds a predetermined value. The output of the level detector 21 is applied to a differentiation circuit 23. The differentiation circuit 23 is responsive to a rise or a leading edge of the output of the level detector 21 to provide one differentiated pulse output to a determining portion 25.

The determining portion 25 comprises a data setter 27, a comparator 29 and an AND gate 31. One input of the AND gate 31 is connected to receive the differentiation pulse output from the previously described differentiation circuit 23. The comparator 29 is connected to receive at one input thereof a digital signal obtained from the analog/digital converter 11 and to receive at the other input thereof an output from the data setter 27. The data setter 27 enables data representing the range of offset value inherently allowed for the apparatus to be entered into the apparatus and is used to set weight value data corresponding typically to approximately four to five percent of the full scale or full range of the apparatus though it is to be appreciated that different offset ranges are possible. The data setter 27 may be provided in the apparatus in the form of a hard wired circuit arrangement or alternatively may be implemented by means of a structure such as a pinboard matrix or a digital switch such as a thumb wheel switch. The comparator 29 is connected to receive as an input A the digital signal obtained from the analog/digital converter 11 and as an input B the output obtained from the data setter 27. The comparator 29 is arranged such that if and when the input A is smaller than the input B (i.e. A<B), an output of a high level or a logic one is provided, whereas if and when the input A is equal to or larger than the input B (i.e. A≧B), an output of a low level or a logic zero is provided. The output of the comparator 29 is applied to the other input of the AND gate 31. The output from the AND gate 31 is applied to a memory 33 as a write enable signal. More specifically, if and when the output from the AND gate 31 is a high level or logic one, the memory 33 stores the data from the analog/digital converter 11 whereas if and when the output of the AND gate 31 is a low level or logic zero, the memory 33 is inhibited. The memory 33 is used for storing a correction factor which is applied to the subtractor 35 as a subtrahend.

The subtractor 35 evaluates the difference between the minuend, i.e. the digital signal obtained from the analog/digital converter 11, and the subtrahend, i.e. the digital signal obtained from the memory 33, and provides the result to the display control 13. The display control 13 is responsive to the signal received from the polarity signal output terminal T2 of the analog/digital converter 11 so as to cause the display 15 to show a digital display of a weighed value corresponding to the digital signal received from subtractor 35 if and when the signal at terminal T2 is a low level or logic zero, and, if and when the polarity signal is a high level or logic one, the display 15 is caused to show a predetermined display without regard to the input digital signal received from the subtractor 35.

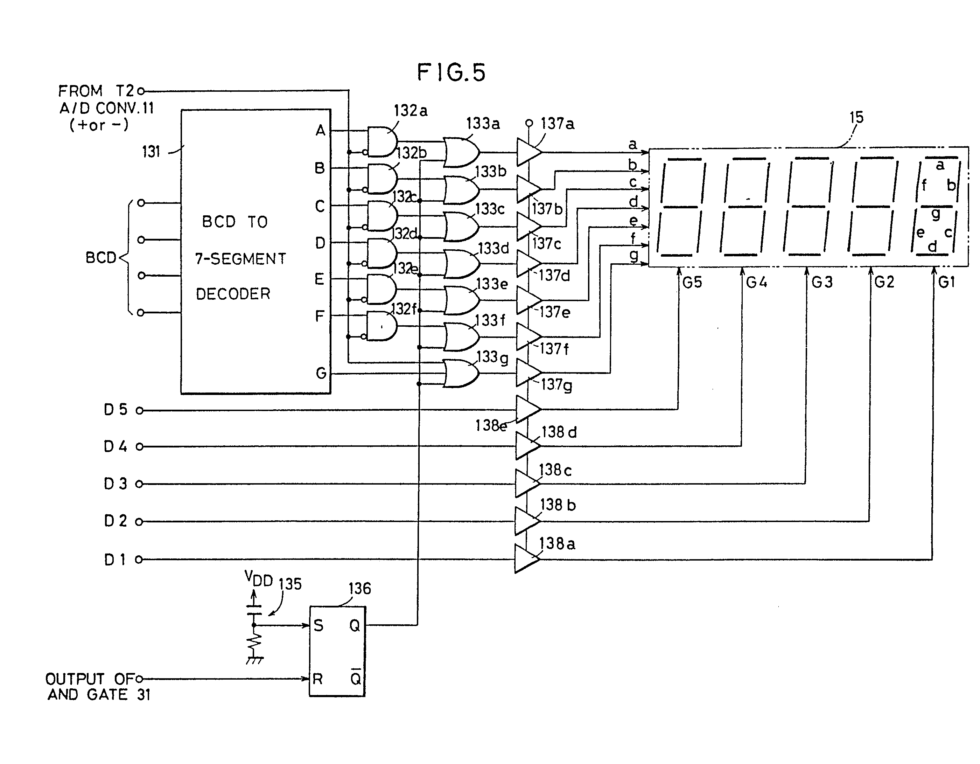

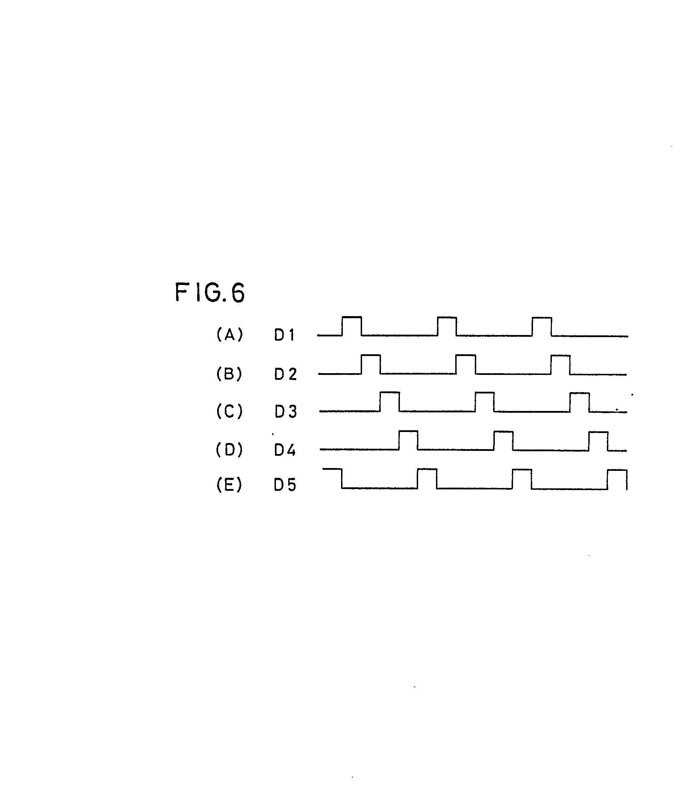

The display control 13 can be arranged to receive the signal from the level detector 21 included in the circuit 17, as is shown by the broken line connection in Fig. 3, and, with such an arrangement, can cause the display 15 to show another predetermined display until a high level signal is received from the level detector 21. The display control 13 will be described subsequently in more detail with reference to Figs. 5 and 6.

In operation of the apparatus, the data setter 27 is set to a weight value corresponding to a point a shown in Fig. 4 which is for example approximately four to five percent of the full range or full scale of the apparatus.

The variable resistor 7 is initially adjusted so that the output voltage obtained from the amplifier 9 comes about mid way to the point a shown in Fig. 4 when no article to be weighed is placed on the apparatus.

The lines b and b' in Fig. 4 show how the characteristics of the weighing apparatus vary with adjustment of the variable resistor 7 shown in Fig. 3.

Upon turning on of the power supply of the apparatus, the integration circuit 19 initiates integration, as shown at (A) in Fig. 3A, so that its output gradually increases until, when the output reaches a predetermined value, a high level signal is obtained at that timing from the level detector 21, as shown at (B) in Fig. 3A. Accordingly, the differentiation circuit 23 provides a differentiated pulse at that timing, as shown at (C) in Fig. 3A.

The turning on of the power supply also causes an analog signal corresponding to the load at that time to be obtained from the strain-gage type load cell 1, and correspondingly a digital signal representaitve of the load is provded by the analog/digital converter 11 at its output terminal T1. The comparator 29 provides a logic one or high level output when the digital data (A) from the analog/digital converter 11 represents a weight value smaller than the digital data (B) provided from the data setter 27. The AND gate 31 is responsive to the logical product of the high level output obtained from the comparator 29 and the pulse obtained from the differentiation circuit 23 to provide a write enable signal to the memory 33. More specifically, during a time period after the turning on of the power supply and until the pulse is obtained from the differentiation circuit 23, i.e. during the time period t in Fig. 3A, the determining portion 25 determines whether the data then obtained from the analog/digital converter 11 is within the predetermined weight value data. In this way, the determining portion 25 determines whether the correction factor being set after the lapse of a time period t0 from turning on of the power supply is within a predetermined offset range, i.e. a range where the linearity of the apparatus is not degraded. If and when the correction factor (A) being set is smaller than a predetermined weight value (B), i.e if and when the data (A) is within the point a shown in Fig. 4, the memory 33 is enabled to set the data output at that time of the analog/digital converter as a correction factor. The data thus set in the memory 33 is applied to the subtractor 35 but since at that timing the minuend and the subtrahend of the subtractor 35 are of the same value, accordingly the display 15 is caused to make a "0" weighed value display.

If, on the other hand, the given data (A) at the end of time period t exceeds the preset weight value data (B), the comparator 29 provides a low level or logic zero output. Accordingly, the AND gate 31 blocks the pulse from the differentiation circuit 23 and the memory 33 is prohibited from storing any data and thus is not loaded with any correction factor.

Now referring to Figs. 5 and 6, the display control 13 and a display operation of the display 15 responsive thereto will be described. As shown in Fig. 5, the display control 13 comprises a decoder 131 connected to receive digital data in binary coded decimal form, for example, from the subtractor 35. The decoder 131 decodes the received digital data so as to derive segment selection signals A to G corresponding to the seven segments a to g, respectively, of each digit position of the display 15. The outputs A to F from the segment decoder 131 are applied to corresponding inhibit gates 132a to 132f, respectively. The inhibit gates 132a to 132f receive at respective inhibit inputs a polarity signal obtained from terminal T2 of the analog/digital converter 11. The outputs of the inhibit gates 132a to 132f are applied to one input of respective OR gates 133a to 133f and the other input of each OR gate is coupled to the output Q of a flip-flop 136. The signal obtained from the output G of the segment decoder 131 is applied to one input of a corresponding OR gate 133g which also is connected to receive the above described polarity signal and the output Q of the flip-flop 136. The outputs of the OR gates 133a to 133g are applied through respective corresponding drivers 137a to 137g to energize the respective segments a to g of the display 15. In the display 15 the corresponding segments of each of the digits are commonly connected, so that the corresponding segments are driven by the outputs of the corresponding drivers. Digit signals D1 to D5 have a timing relation as shown in Fig. 6, so that the respective digits G1 to G5 of the display 15 may be driven by the corresponding drivers 138a to 138e.

The set input S of the flip-flop 136 is connected to receive the output of the differentiation circuit 135, and the reset input R of the flip-flop 136 is connected to receive the output of the AND gate 31 included in the determining portion 27. The differentiation circut 135 provides one differentiated pulse upon turning on of the power supply, for example. Accordingly, the flip-flop 136 is responsive to the turning on of the power supply to make the output Q a high level.

In operation, first of all the case where the positive weighed value data is to be displayed will be described. In such a case, no inhibit inputs are applied to the inhibit gates 132a to 132f and accordingly the respective outputs A to F of the segment decoder 131 are applied through the OR gates 133a to 133f to the drivers 137a to 137f. The output G of the segment decoder 131 is applied through the OR gate 133g to the corresponding driver 137g. Since the digit signals D1 to D5 are provided in succession in a cyclic manner as shown in Fig. 6, the display 15 is responsive to the segment selecting signals and the digit selecting signals to display the data in a digital manner in accordance with the well-known dynamic driving system.

Now a case where the voltage from the amplifier 9 is minus will be described. In such a case, a high level output or logic one is obtained from terminal T2 (Fig. 3) of the analog/digital converter 11. Accordingly, the inhibit gates 132a to 132f are inhibited from passing the data signal. Accordingly, the outputs A to F obtained from the segment decoder 131 are inhibited by the corresponding inhibit gates 132a to 132f, and only the output G is applied through the OR gate 133g to the driver 137g. Accordingly, the display 15 is responsive to the respective digit selecting signals D1 to D5 to make display by the segment G of the corresponding digits G1 to G5. Therefore, the indication provided by the display becomes "– – – – –", thereby to indicate that the weighed value is minus.

On the occasion of turning on of a power supply, the flip-flop 136 is set in response to the output of the differentiation circuit 135, whereby the output Q of the flip-flop 136 becomes high level. Therefore, outputs are obtained from the OR gates 133a to 133g and are applied to the corresponding drivers 137a to 137g. Accordingly, on the occasion of turning on of a power supply, all the segments a to g of the respective digits G1 to G5 in the display 15 are energized, thereby to make an indication "8" in all of the digits. Thereafter, if and when a pulse is obtained from the AND gate 31 shown in Fig. 3, i.e. after the lapse of a predetermined time period t (Fig. 3A) from turning on of the power supply, the flip-flop 136 is reset if and when the weight value data at that time does not exceed the predetermined offset range, whereby the output Q is reversed to a low level. Accordingly, in such a case, the display 15 continues to indicate "8" in all of the digits until after the lapse of the time period t from turning on of the power supply, whereupon the display 15 provides a digital display associated with the output obtained from the segment decoder 131. When the display provides the indication "8" in all the digit positions, the indication may be made in a blinking manner by causing a power supply to the display 15 to be turned on and off respectively, for example. In the absence of a pulse from the AND gate 31 even after the lapse of a time period t from turning on of a power supply, i.e. if and when the data obtained from the analog/digital converter 11 after the lapse of a time period t exceeds the predetermined offset range (the point a in Fig. 4), the flip-flop 136 is not reset and accordingly an indication of "8" at the respective digit positions in the display 15 is continued without being reset. By this means, an operator can determine that the apparatus is seriously malfunctioning to the extent that the zero point of the apparatus has deviated substantially.

Thus, according to the embodiment shown, on the occasion of turning on of a power supply, an indication of "8" is displayed in a continuous or blinking manner in the respective digits of the display 15. After the lapse of a predetermined time period t, if and when an offset value being set is outside a predetermined range, an indication of "8" is continued in the respective digits. As a result, an operator can determine that a weighing measurement effected in such a situation will not necessarily provide an accurate weighed value. Furthermore, since the apparatus is arranged such that when a weighed value becomes minus in the case where the weighing pan, not shown, is raised for some reason an indication of "–" is made in the respective digits in the display 15 as described previously, such situation can also be confirmed with ease.

Although the above described embodiment is structured such that an indication "– – – – –" is made in the display 15 in response to a negative signal being obtained from the analog/digital converter 11, thereby to provide notification of an abnormality of the placing pan, such notifying means may be implemented by a separate display element without relying upon the display 15. Alternatively, such notifying means may comprise a sound alarm means such as a buzzer.

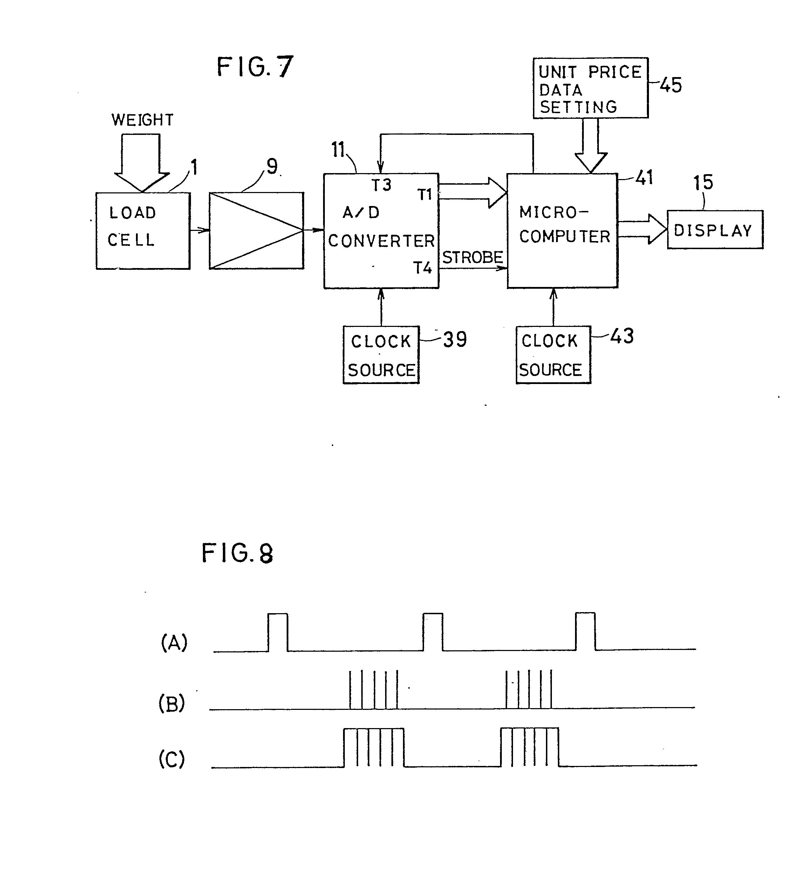

Fig. 7 is a block diagram showing a further embodiment of the present invention. The embodiment shown is implemented as a price scale employing a microcomputer 41. To that end, the microcomputer 41 is connected to receive data from a unit price data setter 45 as well as from the output of the analog/digital converter 11. In the Fig. 7 embodiment the load cell 1 is of the strain-gage type previously described, and the analog/digital converter 11 may be implemented by the previously described integrated circuit. The microcomputer 41 may comprise model No. "6500 series" manufactured by Rockwell International Coporation, U.S.A. The unit price data setter 45 is used to set a unit price of commodities, such as a price per 100 g. Accordingly, the microcomputer 41 is responsive to the given weight value data and the unit price data to evaluate the price of the commodity and display the same by the display 15. Since the structure of such a price scale is well-known to those skilled in the art, a more detailed description thereof will be omitted.

As is well-known, the microcomputer 41 comprises a read only memory for storing a system program for the apparatus, and a random access memory having a register for temporarily storing the digital data obtained from the analog/digital converter 11 and regions for storing other data. The read only memory and the random access memory, not shown, are controlled by an arithmetic logic unit. As is well-known, the microcomputer 41 further comprises an input/output interface, so that the signal from the analog/digital converter 11 is applied through the input/output interface, not shown, to the arithmetic logic unit, not shown, and the signal from the arithmetic logic unit is applied through the input/output interface to the analog/digital converter 11 and the display 15. The analog/digital converter 11 is responsive to the clock obtained from a first clock source 39 to convert the analog voltage into a digital signal. The microcomputer 41 is also responsive to a clock obtained from a second clock source 43 to be operable. The clock pulse obtained from the first clock source 39 is selected to be of say 200 to 500 KHz, whereas the clock pulse obtained from the second clock source 43 is selected to be of say 1 to 2 MHz. The signal applied from the microcomputer 41 to the input terminal T3 of the analog-digital converter 11 is a conversion enable signal (C/S). The signal provided from the output terminal T4 of the analog/digital converter 11 to the microcomputer 41 is a strobe signal. The microcomputer 41 is connected to receive the strobe signal as an interrupt signal input.

Referring to Fig. 8, a read operation of the data from the analog/digital converter 11 into the microcomputer 41 in the Fig. 7 embodiment will be described. The microcomputer 41 provides a conversion enable signal from the terminal C/S to the terminal T3 of the analog/digital converter 11 at a predetermined cycle determinable based on the clock pulse obtained from the second clock source 43. The conversion enable signal is shown as (A) in Fig. 8. The analog/digital converter 11 is responsive to the conversion enable signal to convert the analog voltage obtained from the amplifier 9 into digital data as a function of the clock pulse obtained from the first clock source 39. The analog/digital converter 11 is responsive to completion of such converting operation to provide the strobe signal (interrupt signal) to the microcomputer 41 from the output terminal T4. At the same time, the converted digital data of the binary coded decimal code is provided at the data output terminal T1. Accordingly, the microcomputer 41 is responsive to the interrupt signal, i.e. the strobe signal, to read from the data output terminal T1 the data provided to the input/output port, as shown as (C) in Fig. 8. Then the microcomputer 41 makes a processing operation for evaluating the price of the commodity based on the unit price obtained from the unit price data setter 45 and the newest weighed data and for weighting the weighed data, whereupon the result is displayed by the display 15. After such one cycle operation or control processing is completed, the microcomputer 41 provides again the conversion enable signal C/S to the analog/digital converter 11. Therefore, the analog/digital converter 11 is operable in synchronism with the processing operation by the microcomputer 41 at the same cycle. Therefore, as the loading of the load cell 1 changes, the value displayed by the display 15 is renewed at each conversion enable signal C/S obtained from the microcomputer 41. Thus, since the microcomputer 41 is responsive to the strobe signal or the interrupt signal obtained from the analog/digital converter 11 to read the data as shown as (C) in Fig. 8, an FIFO register (a first-in-first-out register) which has conventionally required in this type of microcomputer can be dispensed with.

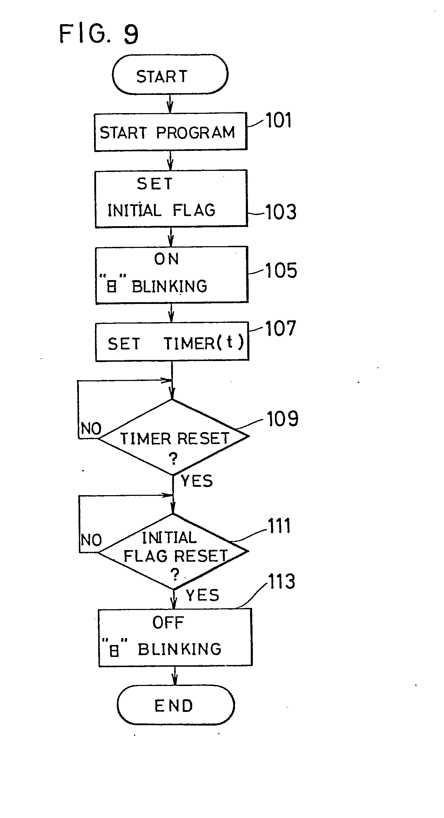

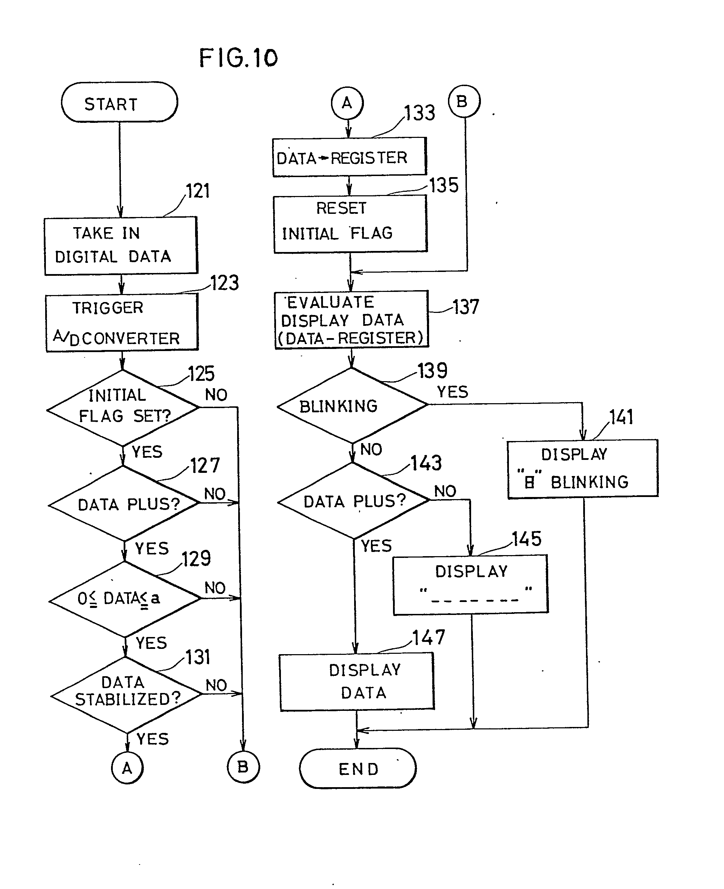

Now referring to Figs. 9 and 10, an operation of the Fig. 7 embodiment will be described.

Fig. 9 is a flow diagram for explaining the operation of the Fig. 7 embodiment on the occasion of turning on of the power supply. More specifically, when a power supply, not shown, is turned on in the Fig. 7 embodiment, a routine shown in Fig. 9 is started and the microcomputer 11 initiates the system program at the first step 101. Then the microcomputer receives an output from a power supply turning on detecting means such as a differentiation circuit as shown in Fig. 5, for example, whereby an initial flag is set at the step 103. Such initial flag is formed in a region of the random access memory, not shown. Then at the step 105 a command for a display mode as described previously in conjunction with the Fig. 5 embodiment is provided. More specifically, in the Fig. 5 embodiment, an indication "8" was made in all of the digits G1 and G5 in the display 15 on the occasion of a power supply, and preferably such indication was made in a blinking manner. Therefore, in the embodiment under discussion, the microcomputer 41 also as adapted such that a command for making an indication "8" in a blinking manner in each of the respective digits in the display 15 is turned on. At the following step 107 a timer for a predetermined time period (t) is set. Such timer function can also be implemented using a portion of the regions in the random access memory, not shown. Then at the step 105 the microcomputer 41 determines whether the predetermined time period (t) has lapsed, i.e. whether the timer, not shown, is reset. If and when it is determined at the step 109 that the timer is reset, i.e. if and when it is determined at the step 109 that the preset time period (t) has lapsed, the microcomputer 41 determines at the step 111 whether the initial flag has been reset. If and when the initial flag has been reset, then a command for a blinking indication of "8" in each of the respective digits in the display 15 is turned off. Meanwhile, the initial flag is reset in the routine shown in Fig. 10. Thus, the microcomputer 41 causes an indication "8" to be made in a blinking manner in each of the respective digits in the display 15 at the beginning of turning on of a power supply at least for the above described predetermined time period (t). As a result, it is notified to an operator that a weighing measurement cannot be made during that time period.

Fig. 10 is a flow diagram for explaining an operation in the case where an interrupt signal is provided from the analog/digital converter 11 to the microcomputer 41. More specifically, if and when the strobe signal or the interrupt signal is provided from the analog/digital converter 11, the microcomputer 41 receives at the first step 121 the data from the analog/digital converter 11, i.e. the data provided from the input/output interface. Reception of such data is as described previously with reference to Fig. 8. Then at the following step 123 the microcomputer 41 provides the conversion enable signal (the signal from the terminal C/S) to the analog/digital converter 11, thereby to trigger the analog/digital converter 11. Then at the step 125 the microcomputer 41 determines whether the initial flag has been set. As described previously, at the beginning of turning on of a power supply, the initial flag has been set. If and when the initial flag has been set, then at the following step 127 it is determined whether the data from the analog/digital converter 11 is plus. When it is determined at the step 127 that the weighed data as received is plus, then it is determined at the step 129 whether the data is within a predetermined offset range, (the range from zero to a in Fig. 4, for example). If it is determined at the step 129 that the data is within the range, then the microcomputer 41 determines at the step 131 whether such weighed value data is in a stabilized state, such determination being made in dependence upon whether or not successively received data packets are the same. For example, in a situation where the placing pan, not shown, is vibrating, the previous data packet and the present data packet will not coincide with each other, whereas when the placing pan is in a stabilized state it is to be supposed that the previous data packet and the present data packet will coincide. Accordingly, by comparing previous present data, determination can be made as to whether the data is in a stabilized state. When it is determined at step 131 that the data has reached a stabilized state, the microcomputer 41 loads the stabilized data obtained from the analog/digital converter 11 in a temporary storing register, not shown. Such temporary storing register can be implemented using a portion of the random access memory, and corresponds to the memory 33 in Fig. 3. After the microcomputer 41 loads the data obtained from the analog/digital converter 11, the microcomputer 41 resets at the step 135 the initial flag which was set when a power supply was turned on.

If and when the decision at any one of the previously described steps 125, 127, 129 and 131 is "NO", the microcomputer 41 shifts to the following step 137.

Accordingly, if and when it is determined at the step 129 that the data obtained from the analog/digital converter 11 exceeds a predetermined range (a range of offset values allowed in advance inherently to the apparatus), the microcomputer 41 then determines at the step 139 whether the blinking indication by the display 15 at the beginning of turning on of a power supply described previously in conjunction with Fig. 9 is an on state. If it is determined at the step 139 that the blinking indication by the display 15 is continuing, then at the step 141 such blinking indication is continued. As a result, it is notified to an operator that the offset value being stored at that time is outside the allowed range and in such a situation the offset value cannot be set.

If and when the decision at the step 127 is "NO", i.e. if and when the data as received is minus, the microcompouter 41 shifts through the steps 139 and 143 to the step 145, where an indication "−" is displayed at each of the respective digits in the display 15, thereby to indicate that the weighed data is minus.

As regards a weighing operation after the offset value is set, since the initial flag has been reset at the previous step 135, decision at the step 125 is "NO" and the microcomputer 41 shifts to the step 137. At the step 137 the difference between the weighed value data obtained from the analog/digital converter 11 and the data previously stored in the temporary storing register, i.e. the correction factor, is evaluated. Thereafter the microcomputer 41 shifts through the steps 139 and 143 to the step 147 and at the step 147 the evaluated weighed value data is displayed by the display 5.

## Claims

1. An electronic weighing apparatus comprising:—
weight sensitive means (1, 9, 11) for providing an output signal representative of a sensed weight, the said means (1, 9, 11) being arranged so as to generate an output signal offset from zero in response to a zero load;
storage means (33) for a correction signal representative of a correction factor to be combined with the output signal from the weight sensitive means (1, 9, 11) for developing a corrected weight signal, said storage means (33) being connected to receive the output of said weight sensitive means (1, 9, 11) for storing the same for use as said correction signal;
control means (17) for providing an enabling signal to said storage means (33);
means (35) responsive to said output signal from the weight sensitive means (1, 9, 11) and to said correction signal from said storage means (33) for developing said corrected weight signal; and
display means (13, 15) responsive to said corrected weight signal for providing a corresponding measured weight indication;
characterised in that:—

said control means (17) is responsive to the switching on of the power supply to the apparatus for providing said enabling signal a predetermined time period after such switching on;

means (25) are provided for determining whether or not the output signal from the weight sensitive means (1, 9, 11) is representative of a sensed weight within a predetermined offset range, for example of the order of 4% to 5% of the full scale range of weight values measurable by the apparatus, and for providing a corresponding output signal; and

the storage by said storage means (33) of the output of said weight sensitive means (1, 9, 11) is dependent upon the presence of said enabling signal from said control means (17) and of a signal from said determining means (25) indicative of a sensed weight being within said predetermined offset range, the arrangement thereby being such that after a predetermined time period has elapsed following the switching on of the apparatus the sensed weight signal then derived from said weight sensitive means (1, 9, 11) will be stored in said storage means (33) for use as said correction signal only if it is representative of a sensed weight within said predetermined offset range.

2. An electronic weighing apparatus in accordance with claim 1, characterised in that said weight sensitive means (1, 9, 11) comprises

load converting means (1, 9) for providing an analog voltage representative of a sensed weight, and

analog/digital converting means (11) for converting said analog voltage from said load converting means (1, 9) into digital data,

and said storage means (33) comprises digital memory means.

3. An electronic weighing apparatus in accordance with any of the preceding claims, characterised in that said determining means 25) comprises

data setting means (27) to enable the entry into the apparatus of data representative of said predetermined offset range, and

comparing means (29) for comparing the data entered by said data setting means (27) and the weight representative data obtained from said weight sensitive means (1, 9, 11).

4. An electronic weighing apparatus in accordance with any of the preceding claims, characterised in that said control means (17) comprises

time constant circuit means (19) for being charged in response to the turning on of the power supply,

level detecting means (21) for providing an output when the output voltage from said time constant circuit means (19) reaches a predetermined level, and

signal generating circuit means (23) responsive to the output of said level detecting means (21) for providing said signal for enabling said storage means (33).

5. An electronic weighing apparatus in accordance with any of the preceding claims, characterised in that, for providing a sensible indication when a state exists at said predetermined time period following switching on of the apparatus in which storage in said storage means (33) of the sensed weight signal from said weight sensitive means (1, 9, 11) is not enabled, visual indicating means are arranged to be energised, said visual indicating means including a portion of said display means (13, 15).

6. An electronic weighing apparatus in accordance with claim 5, characterised in that said display means (13, 15) comprises digital display means (15) having a plurality of digit positions at each of which is a group of segments, and

said visual indicating means comprises specified ones of said segments which are energised in operation of said indication providing means.

7. An electronic weighing apparatus in accordance with claim 6, characterised in that said specified segments are arranged to be energised intermittently in operation of said indication providing means.

8. An electronic weighing apparatus in accordance with any of the preceding claims, characterised by

means for sensing when the output signal from said weight sensitive means (1, 9, 11) is representative of a negative weight value, and

means responsive to the sensing of such an output signal for providing a corresponding sensible indication.

9. An electronic weighing apparatus in accordance with claim 8, characterised in that visual indicating means constituted by a portion of said display means (13, 15) are utilised for providing said negative weight indication.


**Patentansprüche**

1. Elektronische Wiegevorrichtung mit

— gewichtssensitiven Einrichtungen (1, 9, 11), die ein einem zu wiegenden Gewicht entsprechendes Ausgangssignal liefern und in Abhängigkeit von einer Null-Last ein nullpunktabweichendes Ausgangssignal erzeugen;
— eine vom Ausgangssignal der gewichtssensitiven Einrichtungen (1, 9, 11) beaufschlagte Speichereinrichtung (33), die das besagte Ausgangssignal als ein einem Korrekturfaktor entsprechendes Korrektursignal speichert, das wiederum mit dem Ausgangssignal der gewichtssensitiven Einrichtungen (1, 9, 11) verknüpft wird, um ein korrigiertes Gewichtssignal zu erzeugen;
— eine Überwachungseinrichtung (17), die ein Aktivierungssignal an die Speichereinrichtung (33) abgibt;
— eine auf das Ausgangssignal der gewichtssensitiven Einrichtungen (1, 9, 11) und das Korrektursignal von der Speichereinrichtung (33) ansprechende Einrichtung (35) zur Erzeugung des korrigierten Gewichtssignals, und

— eine Anzeigevorrichtung (13, 15), die vom korrigierten Gewichtssignal beaufschlagt ist und eine dem gemessenen Gewicht entsprechende Anzeige liefert;

dadurch gekennzeichnet, daß

— die Überwachungseinrichtung (17) auf das Einschalten der Geräte-Stromversorgung anspricht und das Aktivierungssignal eine festgelegte Zeitspanne nach dem Einschalten des Geräts liefert;
— eine Einrichtung (25) vorgesehen ist, die bestimmt, ob das Ausgangssignal der gewichtssensitiven Einrichtungen (1, 9, 11) innerhalb eines festgelegten Toleranzbereichs, beispielsweise in der Größenordnung von 4 bis 5 % des vollen Skalenbereichs, der mit dem Gerät meßbaren Gewichtswerte liegt und zur Erzeugung eines entsprechenden Ausgangssignals; dass
— die Speicherung des durch die Speichereinrichtung (33) gespeicherten Ausgangswerts der gewichtssensitiven Einrichtungen (1, 9, 11) abhängt von dem durch die Überwachungseinrichtung (17) gelieferten Aktivierungssignal und einem Signal der Bestimmungseinrichtung (25), das angibt, ob das Überprüfte Gewicht innerhalb des vorgegebenen Toleranzbereichs liegt, wobei die Anordnung so getroffen ist, daß nach Ablauf einer vorgegebenen Zeitspanne nach dem Einschalten des Geräts das dann von den gewichtssensitiven Einrichtungen (1, 9, 11) gelieferte Gewichtssignal als Korrektursignal in der Speichereinrichtung (33) nur dann gespeichert wird, wenn es einem abgetasteten Gewichtswert innerhalb des vorgegebenen Toleranzbereichs entspricht.

2. Elektronische Wiegervorrichtung nach Anspruch 1, dadurch gekennzeichnet, daß die gewichtssensitiven Einrichtungen (1, 9, 11) folgende Baugruppen umfassen:

— eine Lastwandlervorrichtung (1, 9), die eine dem zu weigenden Gewicht entsprechende Analogspannung abgibt und
— einen Analog/Digital-Umsetzer (11), der die Analogspannung von der Lastwandlervorrichtung (1, 9) in Digitaldaten umwandelt, und daß
— die Speichereinrichtung (33) digitale Speichermittel aufweist.

3. Elektronische Wiegevorrichtung nach einem der vorstehenden Ansprüche, dadurch gekennzeichnet, daß die Bestimmungseinrichtung (25) folgende Baugruppen aufweist:

— Dateneinstellmittel (27) zur Eingabe von dem gewünschten Toleranzbereich entsprechenden Daten in das Gerät und
— Vergleichseinrichtung (29) zum Vergleich der durch die Dateneinstellmittel (27) eingegebenen Daten mit den von den gewichtssensitiven Einrichtungen (1, 9, 11) gelieferten Gewichtsdaten.

4. Elektronische Wiegevorrichtung nach einem der vorstehenden Ansprüche, dadurch gekennzeichnet, daß die Überwachungsvorrichtung (17) folgende Baugruppen aufweist:

— einen zeitkonstanten Kreis (19), der beim Einschalten der Gerätestromversorgung geladen wird,
— eine Pegelprüfeinrichtung (21), die ein Ausgangssignal liefert, wenn die Ausgangsspannung des zeitkonstanten Kreises (19) eine vorgegebenen Pegel erreicht und
— eine Signalerzeugerschaltung (23), die auf das Ausgangssignal der Pegelprüfeinrichtung (21) anspricht und das Aktivierungssignal für die Speichereinrichtung (33) liefert.

5. Elektronische Wiegervorrichtung nach einem der vorstehenden Ansprüche, gekennzeichnet durch visuelle Anzeigemittel, die einen Teil der Anzeigevorrichtung (13, 15) umfassen und erregbar sind, wenn ein Betriebszustand existiert, bei dem während der auf die Einschaltung des Geräts folgenden vorgegebenen Zeitspanne die Übernahme des von den gewichtssensitiven Einrichtungen (1, 9, 11) ermittelten Gewichtssignals in die Speichereinrichtung (33) nicht freigegeben ist.

6. Elektronische Wiegevorrichtung nach Anspruch 5, dadurch gekennzeichnet, daß

— die Anzeigevorrichtung (13, 15) digitale Anzeitgemittel (15) mit einer Mehrzahl von Ziffernanzeigepositionen aufweist, die jeweils aus einer Gruppe von Anzeigesegmenten bestehen und
— die visuelle Anzeige spezielle dieser Segmente umfaßt, die im Betrieb, d.h. bei fehlender Speicheraktivierung erregbar sind.

7. Elektronische Wiegevorrichtung nach Anspruch 6, dadurch gekennzeichnet, daß die speziellen Segmente im Betrieb, d.h. bei fehlender Speicheraktivierung intermittierend erregbar sind.

8. Elektronische Wiegevorrichtung nach einem der vorstehenden Ansprüche, gekennzeichnet, durch

— Einrichtungen zur Ermittlung, ob das Ausgangssignal der gewichtssensitiven Einrichtungen (1, 9, 11) einem negativen Gewichtswert entspricht und
— eine auf die Ermittlung eines solchen Ausgangssignals ansprechende Einrichtung, die eine entsprechende Überprüfungsanzeige liefert.

9. Elektronische Wiegevorrichtung nach Anspruch 8, dadurch gekennzeichnet, daß Sichtanzeigemittel zur Anzeige von ermittelten negativen Gewichtswerten vorhanden sind, die durch einen Teil der Anzeigevorrichtung (13, 15) gebildet sind.

**Revendications**

1. Appareil de pesage électronique comprenant:

— des moyens sensibles au poids (1, 9, 11) destinés à fournir un signal de sortie représentatif d'un poids détecté, lesdits moyens (1, 9, 11) étant constitués de façon à fournir un signal de sortie décalé de zéro en réaction à une charge nulle;
— des moyens de mémorisation (33) pour un signal de correction représentatif d'un facteur de correction à combiner au signal de sortie provenant des moyens sensibles au poids (1, 9, 11) pour élaborer un signal de poids corrigé, lesdits moyens de mémorisation (33) étant connectés de façon à recevoir la sortie desdits moyens sensibles au poids (1, 9, 11) afin de mémoriser cette sortie pour l'utiliser en tant que signal de correction;
— des moyens de commande (17) destinés à fournir un signal de validation aux moyens de mémorisation (33);
— des moyens (35) réagissant au signal de sortie provenant des moyens sensibles au poids (1, 9, 11) et au signal de correction provenant desdits moyens de mémorisation (33) pour élaborer le signal de poids corrigé; et
— des moyens de visualisation (13, 15) réagisant au signal de poids corrigé pour fournir une indication de poids mesuré correspondante;

caractérisé en ce que:

— les moyens de commande (17) réagissent à l'application de l'alimentation à l'appareil pour fournir le signal de validation au bout d'un temps prédéterminé après l'application;
— des moyens (25) sont prévus pour à déterminer si le signal de sortie provenant des moyens sensibles au poids (1, 9, 11) représente un poids détecté dans un domaine de décalage prédéterminé, par exemple de l'ordre de 4 à 5% la pleine échelle de valeurs de poids mesurables par l'appareil, ou non, et pour fournir un signal de sortie correspondant; et
— la mémorisation par lesdits moyens de mémorisation (33) de la sortie des moyens sensibles au poids (1, 9, 11) dépend de la présence du signal de validation provenant des moyens de commande (17) et d'un signal provenant des moyens de détermination (25) indiquant si le poids détecté se trouve dans la domaine de décalage prédéterminé, la disposition étant en conséquence telle que, une fois qu'un temps prédéterminé s'est écoulé à partir de l'application de l'alimentation à l'appareil, le signal de poids détecté obtenu à partir des moyens sensibles au poids (1, 9, 11) sera mémorisé dans les moyens de mémorisation (33) pour être utilisé en tant que signal de correction seulement s'il représente un poids détecté que est dans le domaine de décalage prédéterminé.

2. Appareil de pesage électronique selon la revendication 1, caractérisé en ce que les moyens sensibles au poids (1, 9, 11) comprennent:

— des moyens de conversion de charge (1, 9) pour fournir une tension analogique représentative d'un poids détecté et
— des moyens de conversion analogique-numérique (11) pour convertir la tension analogique provenant des moyens de conversion de charge (1, 9) en données numériques,
— et en ce que les moyens de mémorisation (33) comprennent des moyens de mémorisation numériques.

3. Appareil de pesage électronique selon l'une quelconque des revendications précédentes, caractérisé en ce que les moyens de détermination (25) comprennent:

— des moyens d'affichage de données (27) pour valider l'entrée dans l'appareil de données représentant ledit domaine de décalage prédéterminé, et
— des moyens de comparaison (29) pour comparer les données introduites à l'aide des moyens d'affichage de données (27) et les données de représentation de poids obtenues à partir des moyens sensibles au poids (1, 9, 11).

4. Appareil de pesage électronique selon l'une quelconque des revendications précédentes, caractérisé en ce que les moyens de commande (17) comprennent:

— des moyens à circuit à constante de temps (19) destinés à être chargés en conséquence de l'application de l'alimentation,
— des moyens de détection de niveau (21) destinés à fournir une sortie lorsque la tension de sortie provenant des moyens à circuit à constante de temps (19) atteint un niveau prédéterminé, et
— un circuit de génération de signal (23) réagissant à la sortie des moyens de détection de niveau (21) pour fournir le signal destiné à valider les moyens de mémorisation (33).

5. Appareil de pesage électronique selon l'une quelconque des revendications précédentes, caractérisé en ce que, de façon à fournir une indication cohérente lorsque, au bout du temps prédéterminé après l'application de l'alimentation à l'appareil, existe un état dans lequel il n'y a pas validation de la mémorisation, dans les moyens de mémorisation (33), du signal de poids détecté provenant des moyens sensibles au poids (1, 9, 11), des moyens indicateurs observables visuellement sont montés de façon à être activés, ces moyens indicateurs comportant une partie desdits moyens de visualisation (13, 15).

6. Appareil de pesage électronique selon la revendication 5, caractérisé en ce que:

— les moyens de visualisation (13, 15) comprennent des moyens de visualisation numérique (15) comprenant plusieurs positions de chiffre ayant chacune un groupe de segments, et
— les moyens indicateurs observables visuellement comprennent des segments spécifiés parmi lesdits segments, ces segments spécifiés étant excités lors du fonctionnement des moyens fournissant une indication.

7. Appareil de pesage électronique selon la revendication 8, caractérisé en ce que les segments spécifiés sont montés de façon à être excités par intermittences lors du fonctionnement des moyens fournissant une indication.

8. Appareil de pesage électronique selon l'une quelconque des revendications précédentes, caractérisé par:

— des moyens pour détecter si le signal de sortie provenant des moyens sensibles au poids (1, 9, 11) est une représentation d'une valeur de poids négatif, et
— des moyens qui, en réaction à la détection d'un tel signal de sortie, fournissent une indication cohérente correspondante.

9. Appareil de pesage électronique selon la revendication 8, caractérisé en ce que les moyens indicateurs observables visuellement constitués par une partie desdits moyens de visualisation (15) sont utilisés pour fournir ladite indication de poids négatif.

FIG.1

PRIOR ART

A/D CONVERTER

DISPLAY CONTROL

DISPLAY

FIG.2

DIGITAL OUTPUT

PRIOR ART

LOAD

FIG.4

DIGITAL OUTPUT

LOAD

# FIG. 3

# FIG. 3A

0 021 568

# FIG.5

FROM T2  
A/D CONV.11  
(+or −)

131

BCD

BCD TO  
7-SEGMENT  
DECODER

A  
B  
C  
D  
E  
F  
G

132a  
132b  
132c  
32d  
132e  
132f

133a  
133b  
133c  
133d  
133e  
133f  
133g

137a  
137b  
137c  
137d  
137e  
137f  
137g

a  
b  
c  
d  
e  
f  
g

15

a  
f    b  
g  
e    c  
d

G5    G4    G3    G2    G1

D 5  
D 4  
D 3  
D 2  
D 1

138e  
138 d  
138 c  
138 b  
138 a

V_DD 135    136

S    Q

R    Q̄

OUTPUT OF  
AND GATE 31

0 021 568

3

F IG.6

(A)　D 1

(B)　D 2

(C)　D 3

(D)　D 4

(E)　D 5

## FIG. 7

## FIG. 8

# FIG. 9

START

START PROGRAM ──101

SET
INITIAL FLAG ──103

ON
"8" BLINKING ──105

SET TIMER(t) ──107

TIMER RESET ? ──109
NO / YES

INITIAL FLAG RESET ? ──111
NO / YES

OFF
"8" BLINKING ──113

END

## FIG.10

```
        ┌─────────┐                    (A)              (B)
        │  START  │                     │                │
        └─────────┘                     ▼ ──133          │
             │                 ┌──────────────────┐      │
             │                 │ DATA→REGISTER    │      │
             ▼                 └──────────────────┘      │
                                        │ ──135          │
        ┌──────────────┐       ┌──────────────────┐      │
        │  TAKE  IN    │──121  │    RESET         │      │
        │ DIGITAL DATA │       │  INITIAL  FLAG   │      │
        └──────────────┘       └──────────────────┘      │
             │ ──123                    │ ◀──────────────┘
        ┌──────────────┐       ┌──────────────────┐
        │  TRIGGER     │       │  EVALUATE        │──137
        │ A/D CONVERTER│       │ DISPLAY  DATA    │
        └──────────────┘       │ (DATA-REGISTER)  │
             │ ──125           └──────────────────┘
          ╱──────╲  NO                  │ ──139
         ╱ INITIAL ╲──────     ╱──────────╲  YES
         ╲FLAG SET?╱          ╲ BLINKING  ╱──────────────┐
          ╲──────╱             ╲──────────╱              │ ──141
             │ YES                  │ NO          ┌──────────────┐
             │ ──127               │ ──143       │   DISPLAY    │
          ╱──────╲  NO          ╱──────────╲  NO │ "8" BLINKING │
         ╱DATA PLUS?╲────      ╱ DATA  PLUS?╲────└──────────────┘
          ╲──────╱             ╲──────────╱    │      │
             │ YES                 │ YES       │      │
             │ ──129               │        ┌──────────────┐ ──145
          ╱──────╲  NO             │        │   DISPLAY    │
         ╱0≦DATA≦a ╲────           │        │ "_____"     │
          ╲──────╱                 │        └──────────────┘
             │ YES                 │ ──147       │
             │ ──131        ┌──────────────┐     │
          ╱──────╲  NO      │   DISPLAY    │     │
         ╱  DATA   ╲───     │    DATA      │     │
         ╲STABILIZED?╱      └──────────────┘     │
          ╲──────╱                 │ ◀───────────┘
             │ YES                 ▼
            (A)    (B)        ┌─────────┐
                              │   END   │
                              └─────────┘
```